(19) Europäisches Patentamt
European Patent Office
Office européen des brevets

(11) **EP 4 756 720 A1**

(12) **EUROPEAN PATENT APPLICATION**
published in accordance with Art. 153(4) EPC

(43) Date of publication:
**10.06.2026 Bulletin 2026/24**

(21) Application number: **25778253.2**

(22) Date of filing: **06.03.2025**

(51) International Patent Classification (IPC):
*G06T 11/40* *(2006.01)*

(52) Cooperative Patent Classification (CPC):
**G06T 11/40**

(86) International application number:
**PCT/CN2025/081032**

(87) International publication number:
**WO 2025/200983 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 CN 202410367319**

(71) Applicant: HUAWEI TECHNOLOGIES CO., LTD.
**Shenzhen 518129 (CN)**

(72) Inventors:
• **WANG, Chaoqun**
**Shenzhen, Guangdong 518129 (CN)**
• **SHAO, Jicheng**
**Shenzhen, Guangdong 518129 (CN)**
• **CHEN, Ziqiang**
**Shenzhen, Guangdong 518129 (CN)**
• **XIAO, Yiwen**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COLOR FILLING METHOD AND ELECTRONIC DEVICE**

(57) This application provides a color filling method and an electronic device. A first interface is displayed, where the first interface includes a first region and a second region, a color of the first region is a first color, a color of the second region is a second color, a junction of the first region and the second region includes M colors, and the M colors are different from the first color and the second color. In response to an operation of the user filling the second region with the third color, P colors are determined based on the second color, a third color, and one or more of the M colors. The second color is replaced with the third color, and one or more of the M colors are replaced with the P colors. Because a new color at the junction is determined based on a color to be used for filling, a seed point color, and a color at the junction, smoother color transition can be achieved while ensuring a filling effect, thereby mitigating aliasing and improving user experience in drawing.

```
┌─────────────────────────────────────────┐
│ S701: Display a first interface, where   │
│ the first interface includes a first     │
│ region and a second region               │
└─────────────────────────────────────────┘
                    │
┌─────────────────────────────────────────┐
│ S702: In response to an operation of a   │
│ user filling the second region with the  │
│ third color, determine P colors based on │
│ a second color, one or more of M colors, │
│ and a third color                        │
└─────────────────────────────────────────┘
                    │
┌─────────────────────────────────────────┐
│ S703: Replace the second color with the  │
│ third color, and replace one or more of  │
│ the M colors with the P colors           │
└─────────────────────────────────────────┘
```

FIG. 7

**Description**

This application claims priority to Chinese Patent Application No. 202410367319.1, filed with the China National Intellectual Property Administration on March 28, 2024 and entitled "COLOR FILLING METHOD AND ELECTRONIC DEVICE", which is incorporated herein by reference in its entirety.

**TECHNICAL FIELD**

This application relates to the field of electronic devices, and more specifically, to a color filling method and an electronic device.

**BACKGROUND**

With the advancement of technology, an increasing number of users choose to draw on electronic devices. Generally, drawing applications on electronic devices provide a fill tool, and users may quickly fill a colored region on a canvas with a desired color by using the fill tool. However, in some application scenarios, when users use the fill tool to fill a filled region, there may be a noticeable discontinuity at a junction of the filled region and its adjacent region, resulting in jagged edges that severely affect user experience and drawing efficiency. Therefore, how to reduce jaggedness between a filled region and another region has become an urgent technical problem to be resolved.

**SUMMARY**

This application provides a color filling method and an electronic device. In embodiments of this application, when performing flood fill, the electronic device may determine a new color at a junction based on a color to be used for filling, a seed point color, and a color at the junction, and then fill the junction with the new color at the junction. In this way, smoother color transition can be achieved while ensuring a filling effect, thereby mitigating aliasing and improving user experience in drawing.

According to a first aspect, a color filling method is provided. The method includes: displaying a first interface, where the first interface includes a first region and a second region, a color of the first region is a first color, a color of the second region is a second color, a junction of the first region and the second region includes M colors, the M colors are determined based on the first color and the second color and are different from the first color and the second color, and M is an integer greater than or equal to 1; in response to an operation of a user filling the second region with the third color, determining P colors based on the second color, a third color, and one or more of the M colors, where P is an integer greater than or equal to 1; and replacing the second color with the third color, and replacing one or more of the M colors with the P colors.

In this embodiment of this application, when performing flood fill, the electronic device may determine a new color at a junction based on a color to be used for filling, a seed point color, and a color at the junction, and then fill the junction with the new color at the junction. In this way, smoother color transition can be achieved while ensuring a filling effect, thereby mitigating aliasing and improving user experience in drawing.

With reference to the first aspect, in some implementations of the first aspect, the M colors include a fourth color, and determining the P colors based on the second color, the third color, and the one or more of the M colors includes: determining a fifth color based on the second color, the third color, and the fourth color; and replacing the one or more of the M colors with the P colors includes: replacing the fourth color with the fifth color.

With reference to the first aspect, in some implementations of the first aspect, determining the fifth color based on the second color, the third color, and the fourth color includes: determining a first transparency based on the second color and the fourth color; and determining the fifth color based on the first transparency, the third color, and the fourth color.

With reference to the first aspect, in some implementations of the first aspect, determining the first transparency based on the second color and the fourth color includes: determining the first transparency according to the following formula:

$$a = 1 - \frac{\text{fun1}(|C - B|)}{\text{fun2}(B)}$$

where a is the first transparency, C is RGB values of the fourth color, B is RGB values of the second color, fun1() is a function for obtaining a maximum, a minimum, or an average for RGB channels, and fun2() is a function for obtaining a maximum for RGB channels; and determining the fifth color based on the first transparency, the third color, and the fourth color includes: determining the fifth color according to the following formula:

$$D = C + (A - C) \times a$$

where D is RGB values of the fifth color, and A is RGB values of the third color.

With reference to the first aspect, in some implementations of the first aspect, replacing the second color with the third color includes: determining the second region as an initial flood region, where the initial flood region is a region in which RGB values of a pixel are equal to RGB values of the second color; and filling the initial flood region with the third color.

With reference to the first aspect, in some implementations of the first aspect, in response to the operation of the user filling the second region with the third color, determining the P colors based on the second color, the third color, and the one or more of the M colors includes: determining P dynamic flood regions based on a difference between RGB values of the second color and RGB values of the one or more of the M colors; and determining the P colors based on colors of the P dynamic flood regions, the third color, and the second color; and replacing the one or more of the M colors with the P colors includes: filling the P dynamic flood regions with the P colors.

With reference to the first aspect, in some implementations of the first aspect, P≤M.

With reference to the first aspect, in some implementations of the first aspect, opacities of pixels of the first interface are the same.

With reference to the first aspect, in some implementations of the first aspect, the opacities of the pixels of the first interface are equal to 1.

With reference to the first aspect, in some implementations of the first aspect, the first interface is an interface of a drawing application, a drawing interface in a game application, a conferencing application, an educational application, or a note-taking application.

According to a second aspect, an embodiment of this application provides an electronic device. The electronic device includes modules/units for performing the method according to any one of the foregoing aspect or the possible designs of the foregoing aspect. The modules/units may be implemented by hardware, or may be implemented by hardware executing corresponding software.

According to a third aspect, an embodiment of this application provides a chip. The chip is coupled to a memory in an electronic device, and is configured to: invoke a computer program stored in the memory and perform the technical solutions according to any one of the foregoing aspect or the possible designs of the foregoing aspect of embodiments of this application. In embodiments of this application, "coupling" means that two components are directly or indirectly connected to each other.

According to a fourth aspect, an embodiment of this application provides an electronic device. The electronic device includes one or more processors and one or more memories. The one or more memories store one or more computer programs, the one or more computer programs include instructions, and when the instructions are executed by the one or more processors, any one of the foregoing aspect or the possible implementations of the foregoing aspect is performed.

According to a fifth aspect, a computer-readable storage medium is provided. The computer-readable storage medium includes a computer program or instructions, and when the computer program or the instructions are run on a computer, the method according to any one of the first aspect or the possible implementations of the first aspect is performed.

According to a sixth aspect, a computer program product is provided. The computer program product includes a computer program or instructions, and when the computer program or the instructions are run on a computer, the method according to any one of the first aspect or the possible implementations of the first aspect is performed.

According to a seventh aspect, a computer program is provided. When the computer program is run on a computer, the method according to any one of the first aspect and the possible implementations of the first aspect is performed.

For beneficial effects of the second aspect to the seventh aspect, refer to the beneficial effects of the first to the third aspects. Details are not described again.

**BRIEF DESCRIPTION OF DRAWINGS**

FIG. 1 is a diagram of a structure of an electronic device according to an embodiment of this application;
FIG. 2 is a block diagram of a software structure of an electronic device according to an embodiment of this application;
FIG. 3 is a diagram of a flood fill algorithm;
FIG. 4(a) to FIG. 4(f) are a diagram of a flood fill algorithm;
FIG. 5 is a schematic flowchart of a color filling method according to an embodiment of this application;

FIG. 6 is a flowchart of flood fill according to an embodiment of this application;

FIG. 7 is a schematic flowchart of a color filling method according to an embodiment of this application; and

FIG. 8 is a diagram of composition of an electronic device 800 according to an embodiment of this application.

## DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a personal computer (personal computer, PC), for example, a laptop computer (Laptop) or a desktop computer. An operating system on the PC includes but is not limited to a desktop operating system such as a Windows operating system, a Linux operating system, and a MacOS operating system, or may be a future desktop operating system.

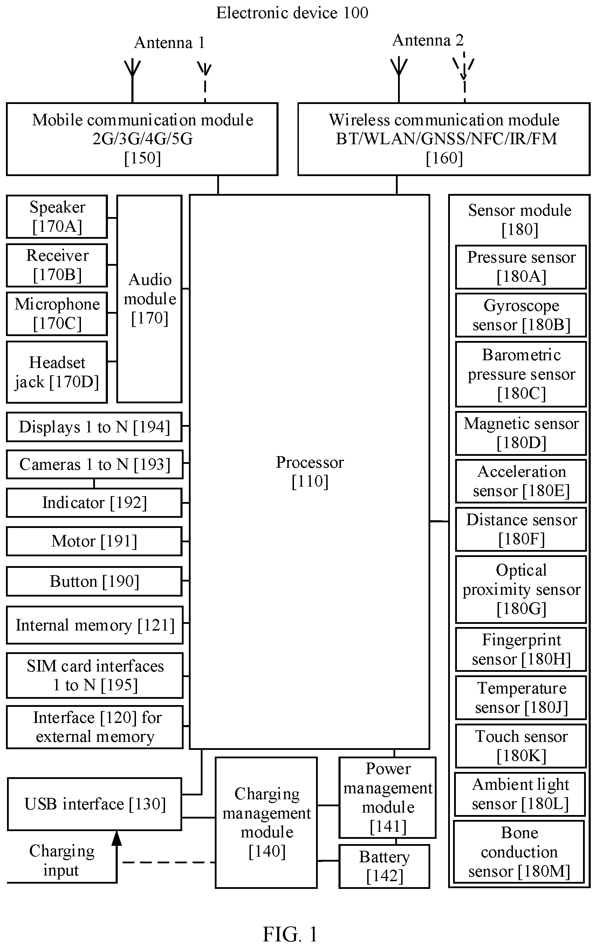

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-

transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented by the antenna 1, the antenna 2, the mobile communication module 150, the wireless communication module 160, the modem processor, the baseband processor, and the like.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

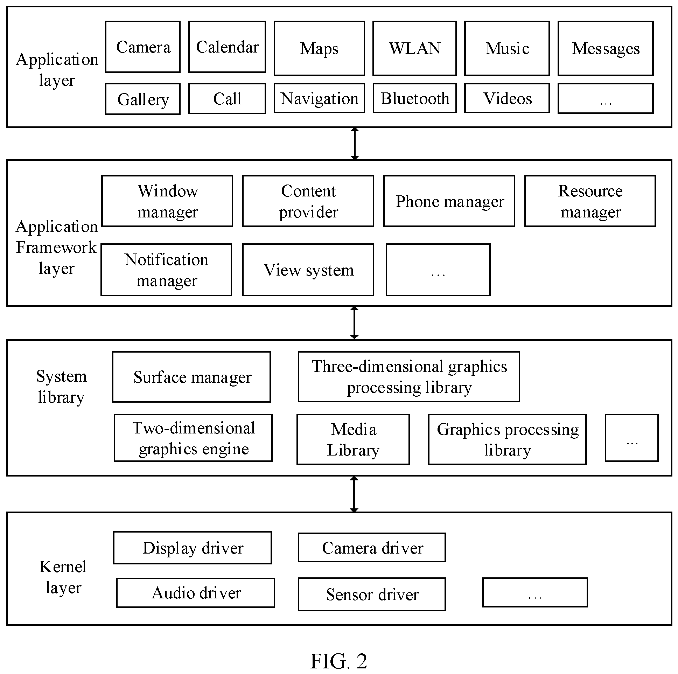

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers, from top to bottom: an application layer, an application framework and service layer, an Android runtime (Android runtime) and system library, and a kernel layer. The application layer may include a series of application packages.

As shown in FIG. 2, the application layer may include Camera, Settings, a third-party application, and the like. The third-party application may include Gallery, Calendar, Call, Maps, Navigation, WLAN, Bluetooth, Music, Videos, Messages, and the like.

The application framework layer provides an application programming interface (application programming interface, API) and a programming framework for an application at the application layer. The application framework layer may include some predefined functions.

As shown in FIG. 2, the application framework and service layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes a visual control, like a control for displaying a text or a control for displaying a picture, for example, displaying indication information for prompting a virtual shutter button in this embodiment of this application. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various types of sensors, for example, various types of sensors described in FIG. 1, and an acceleration sensor, a gyroscope sensor, a touch sensor, and the like in embodiments of this application.

It should be noted that the framework of the Android system is only used as an example in FIG. 2, and should not be construed as a specific limitation on an embodiment of this application. In an embodiment of this application, the electronic device may also be equipped with another operating system (for example, a HarmonyOS operating system), and different operating systems may have different frameworks. It may be understood that when different frameworks are used, specific names of layers of the frameworks may be different.

For ease of understanding embodiments of this application, concepts that may be used in embodiments of this application are first described.

Red, green, blue (red, green, blue, RGB): a color model, in which three color channels, red, green, and blue, are altered and superimposed to obtain a variety of colors, including almost all of the colors that can be perceived by human vision. RGB is one of the most widely used color systems currently. An RGB image uses only three colors, which can be mixed at different proportions to display 16777216 (256*256*256) colors on the screen.

RGBA: a color model that has an opacity (Alpha) channel added to the RGB color model. The alpha channel is referred to as an a-channel hereinafter. A value of the a-channel may represent the transparency of a color. A value range of the a-channel may be [0, 1] or [0, 255]. In the following description, the value range of the a-channel is [0, 1], for example. When the value of the a-channel is 1, it indicates that the color is completely opaque. When the value of the a-channel is 0, it indicates that the color is completely transparent.

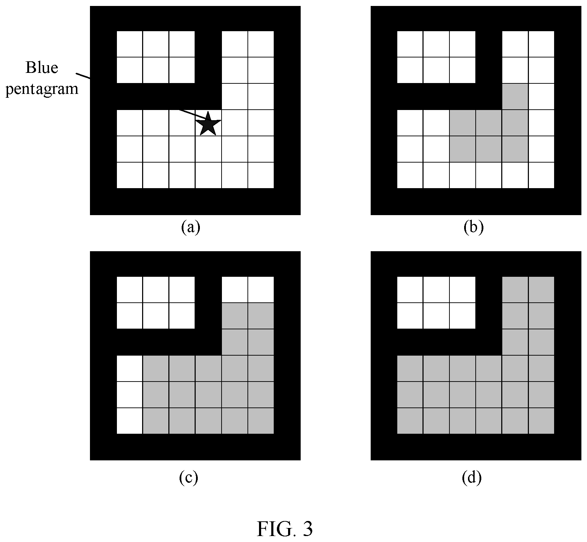

Flood fill: a technology for image processing, which expands a filled region starting from a seed point by selecting adjacent pixels and changing the color of the pixels according to a specific condition, until a stop condition is satisfied. In other words, the essence of flood fill is to find a region that satisfies a condition, and replace a pixel value of the region with a specified color. Flood fill is described in detail below with reference to FIG. 3.

An image displayed by the electronic device on a drawing interface may be as shown in (a) in FIG. 3. In response to a fill operation of a user, the electronic device determines a seed point, which may also be referred to as a start point. The seed point may be a location where the user clicks on the screen, indicated by a blue pentagram in (a) in FIG. 3. An initial color at the seed point may be represented as (255, 255, 255), that is, the RGB values of the color of the seed point.

Assuming that the RGB values of a color used by the user for filling may be represented as (255, 192, 0), the electronic device may look for a region that satisfies a condition by using the seed point as a center until a black border is encountered. For example, the region that satisfies the condition may be a region in which a difference between the RGB values of a pixel and the RGB values of the seed point is less than a threshold N. To be specific, when a difference between the RGB values of a pixel and the RGB values of the seed point is less than N, the pixel is a pixel of the filled region; otherwise, when a difference between the RGB values of a pixel and the RGB values of the seed point is greater than N, the pixel is not a pixel of the filled region. For example, a difference between the RGB values of a black pixel in FIG. 3 and the RGB values of the seed point is greater than N.

As shown in (b) to (d) in FIG. 3, the electronic device may fill all colors of a region that satisfies the condition with the color selected by the user.

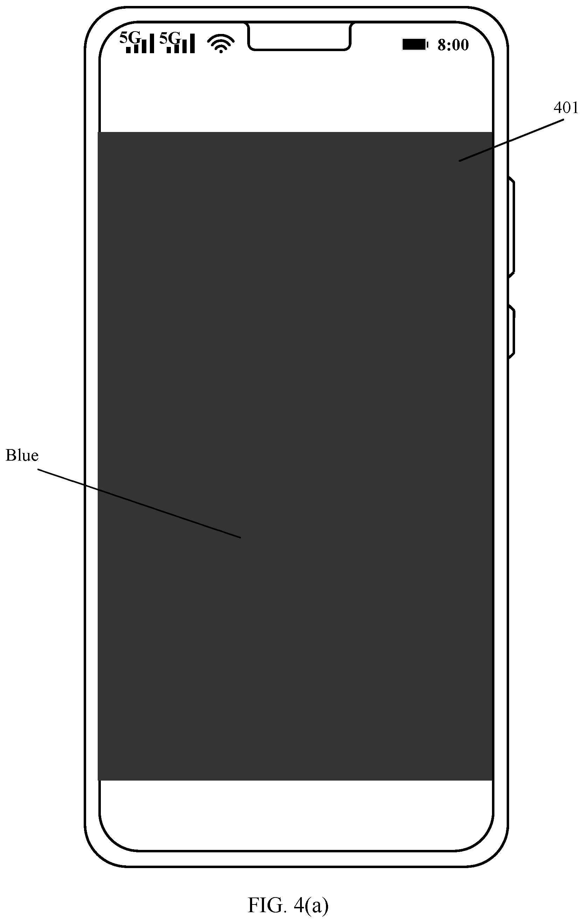

It can be learned that a flood fill algorithm allows to quickly fill a region with a color desired by users. However, in some scenarios, when users use a fill tool to fill a filled region, there may be a noticeable discontinuity at a junction of the filled region and its adjacent region, resulting in aliasing that severely affects user experience and drawing efficiency. A description is provided below with reference to FIG. 4(a) to FIG. 4(f).

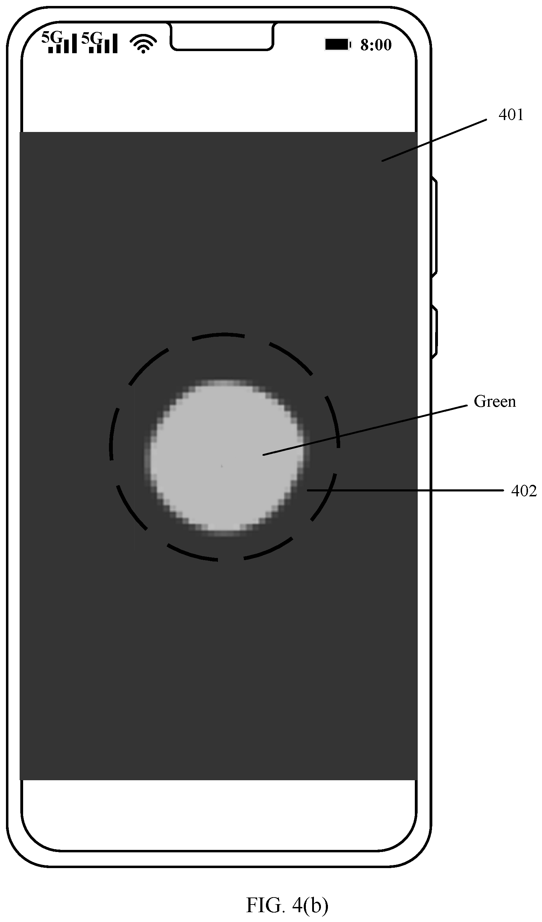

As shown in FIG. 4(a), the electronic device displays an interface 401. The interface 401 is a drawing interface. The interface 401 is filled with blue. In this case, RGBA of the interface 401 is (0, 0, 255, 1.0). Upon detecting a drawing operation performed by the user on the interface 401, the electronic device may display a GUI as shown in FIG. 4(b). The drawing operation by the user is drawing a circle on the interface 401 by using a green brush.

For example, the drawing interface may be an interface of a drawing application, an interface of a game application, or the like.

As shown in FIG. 4(b), the electronic device may display a green circle on the interface 401 in response to the operation of the user, and RGB values corresponding to the green are RGB values #1.

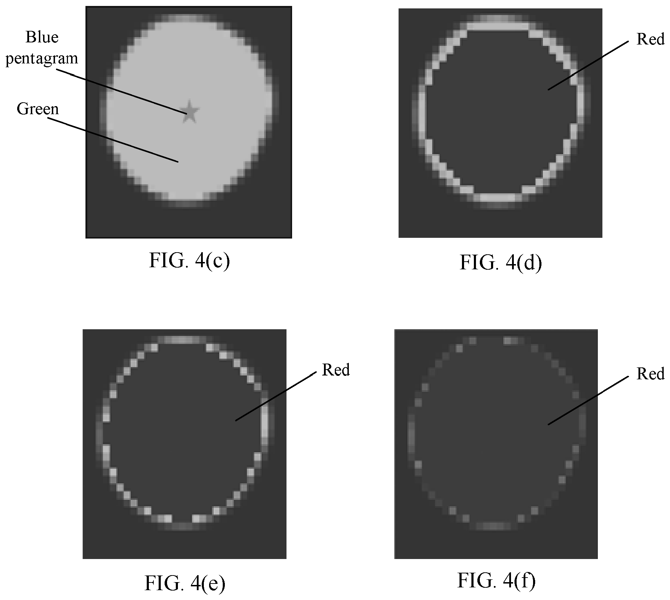

It should be noted that, to more clearly display details at a junction of the green straight line and the blue background, FIG. 4(c) to FIG. 4(f) show an image of a region 402 of the interface 401.

As shown in FIG. 4(c), when drawing the green circle on the interface 401, the electronic device presents a gradient effect, that is, a gradual transition from green to blue, at the junction of the green circle and the blue background, to avoid an abrupt appearance. After the electronic device completes frame rendering for the green circle, pixels in the interface 401 have the same opacity. For example, the opacity of the pixels in the interface 401 is 1.

It may be understood that the junction of the green circle and the blue background includes a plurality of colors to present the gradient effect. The plurality of colors are determined by the electronic device based on green and blue while rendering the circle. In the following description, as an example, the junction of the green circle and the blue background includes a color #1, a color #2, a color #3, and a color #4, where a difference between RGB values corresponding to the color #1 and the RGB values #1 < a difference between RGB values corresponding to the color #2 and the RGB values #1 < a difference between RGB values corresponding to the color #3 and the RGB values #1 < a difference between RGB values corresponding to the color #4 and the RGB values #1. In other words, the color #1 is closer to the green in the interface 401 than the color #2, the color #2 is closer to the green in the interface 401 than the color #3, and the color #3 is closer to the green in the interface 401 than the color #4; or the color #4 is closer to the blue in the interface 401 than the color #3, the color #3 is closer to the blue in the interface 401 than the color #2, and the color #2 is closer to the blue in the interface 401 than the color #1.

Upon detecting an operation of the user filling the green circle with red, the electronic device may determine, in response to the operation, a location where the user clicks as a seed point (that is, a location indicated by a blue pentagram in the figure), and perform flood fill with the seed point as a start point.

When performing flood fill, the electronic device may adjust N, to control a size of a filled region.

For example, when N=0, the electronic device may determine a filled region #1, and change a color of the filled region #1 from green to red, as shown in FIG. 4(d).

It may be understood that, when N=0, RGB values of each pixel in the filled region #1 determined by the electronic device are the same as the RGB values of the seed point, that is, the RGB values #1.

For example, when N=50%*255=127.5, the electronic device may determine a filled region #2 based on N and the RGB values #1, and replace all colors in the filled region #2 with red, as shown in FIG. 4(e), where a difference between RGB values of a pixel in the filled region #2 and the RGB values #1 is less than 127.5.

It may be understood that an area of the filled region #2 is greater than an area of the filled region #1, and the filled region #2 may include a plurality of colors, that is, may include the color (green) corresponding to the seed point, and also the color #1 and the color #2. In other words, when the filled region is the filled region #2, the electronic device replaces all of green, the color #1, and the color #2 with red.

For example, when N=90%*255=229.5, the electronic device may determine a filled region #3 based on N and the RGB values #1, and replace all colors in the filled region #3 with red, as shown in FIG. 4(f), where a difference between RGB values of a pixel in the filled region #3 and the RGB values #1 is less than 229.5.

It may be understood that an area of the filled region #3 is greater than an area of the filled region #2, and the filled region #3 may include a plurality of colors, that is, may include the color (green) corresponding to the seed point, and also the color #1, the color #2, and the color #3. In other words, when the filled region is the filled region #3, the electronic device replaces all of green, the color #1, the color #2, and the color #3 with red.

It can be seen from FIG. 4(d) to FIG. 4(f) that, to better fill the green circle, N needs to be adjusted to expand the filled region. When N is adjusted to a relatively large value, the filled region may be gradually expanded to the junction of the green circle and the blue background, and one or more colors that are originally used for transition from green to blue at the junction are replaced with red, losing the gradient effect of the junction. The transition from red to blue is very unnatural, forming a sharp discontinuity, and presenting noticeable aliasing.

In addition, even if the filled region is not expanded to the junction of the green circle and the blue background, the transition is still very abrupt and unnatural when the circle in the figure changes from green to red, because the one or more colors at the junction are determined based on green and blue.

For example, before filling, the junction of the green circle and the blue background includes the color #1, the color #2, the color #3, and the color #4; that is, green transitions gradually through the four colors to blue. After the green circle is filled with red, there is only one transition color, that is, the color #4, between red and blue, because the color #1, the color #2, and the color #3 at the junction are all replaced with red. In addition, the color #4 is determined based on green and blue. Therefore, after the green circle is filled with red, the gradient effect at the junction is lost. The transition from red to blue is very unnatural, forming a sharp discontinuity, and presenting noticeable aliasing.

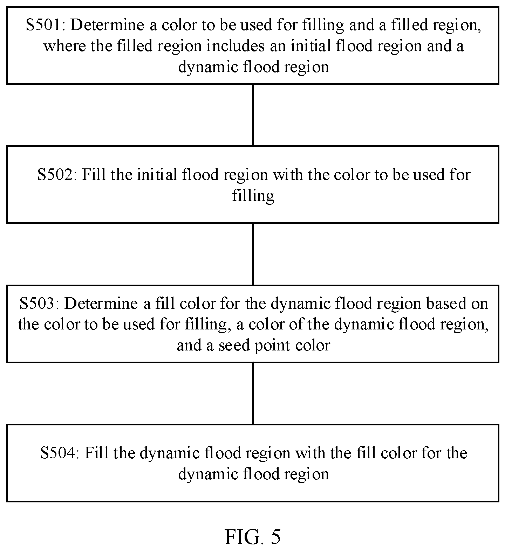

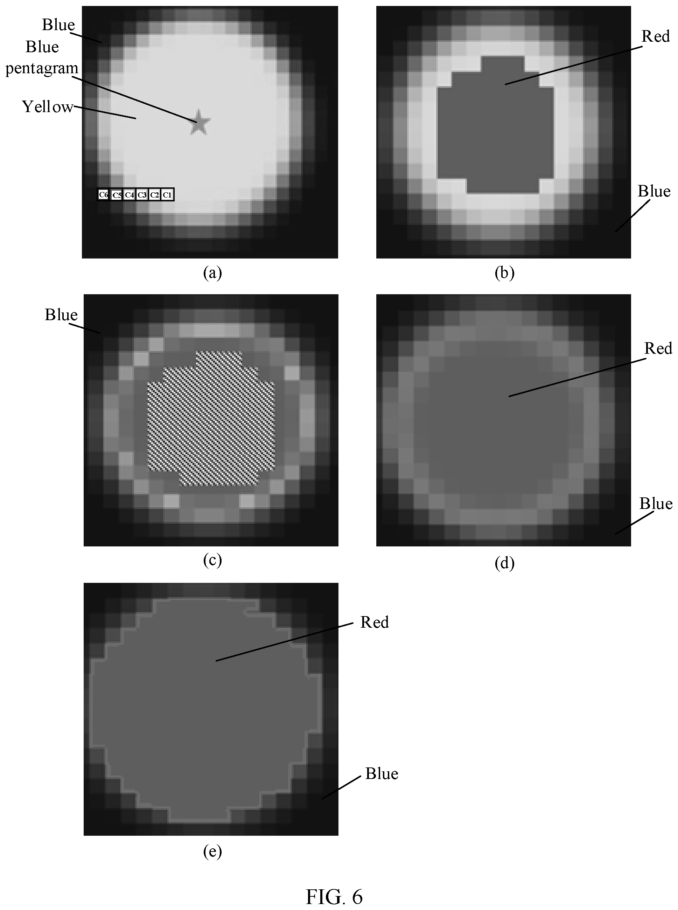

In conclusion, in some scenarios, when users use a fill tool to fill a filled region, there may be a noticeable discontinuity at a junction of the filled region and its adjacent region, resulting in aliasing that severely affects user experience and drawing efficiency. In view of this, this application provides a color filling method, so that smoother color transition can be achieved while ensuring a filling effect, thereby improving user experience. A color filling method provided in an embodiment of this application is first described below with reference to FIG. 5 and FIG. 6.

FIG. 5 is a schematic flowchart of a color filling method according to an embodiment of this application. As shown in FIG. 5, the method includes the following steps.

S501: Determine a color to be used for filling and a filled region, where the filled region includes an initial flood region and a dynamic flood region.

An electronic device may determine the color to be used for filling and the filled region based on an operation by a user, where the filled region may include an initial flood region (initmask) and a dynamic flood region (currentmask).

In an embodiment of this application, the filled region may be divided into the initial flood region and the dynamic flood region, where RGB values of a pixel in the initial flood region are equal to RGB values of a seed point, and RGB values of a pixel in the dynamic flood region are not equal to the RGB values of the seed point, but a difference between the two is less than N.

The electronic device may fill the initial flood region with the color to be used for filling. That is, in an example shown in FIG. 6, the initial flood region is filled with red. In addition, the electronic device may further determine one or more colors based on the color to be used for filling, a seed point color, and a color at a junction of the filled region and another region, and fill the dynamic flood region with the one or more colors. For details, refer to the following description.

For example, as shown in (a) in FIG. 6, the drawing interface displayed by the electronic device includes a blue background and a yellow circle, where RGB values corresponding to blue are denoted as RGB values #1, and RGB values corresponding to yellow are denoted as RGB values #2. It can be seen from (a) in FIG. 6 that, there are a plurality of colors at the junction of the yellow circle and the blue background, which are respectively a color #1, a color #2, a color #3, a color #4, a color #5, and a color #6, respectively indicated by C1, C2, C3, C4, C5, and C6 in the figure.

It may be understood that, a difference between RGB values of the color #1 and the RGB values #2 < a difference between RGB values of the color #2 and the RGB values #2 < a difference between RGB values of the color #3 and the RGB values #2 < a difference between RGB values of the color #4 and the RGB values #2 < a difference between RGB values of the color #5 and the RGB values #2 < a difference between RGB values of the color #6 and the RGB values #2; and a difference between the RGB values of the color #1 and the RGB values #1 > a difference between the RGB values of the color #2 and the RGB values #1 > a difference between the RGB values of the color #3 and the RGB values #1 > a difference between the RGB values of the color #4 and the RGB values #1 > a difference between the RGB values of the color #5 and the RGB values #1 > a difference between the RGB values of the color #6 and the RGB values #1.

In the example shown in FIG. 6, a region in which RGB values of a pixel are the RGB values #1 may be referred to as a region #1, a region in which RGB values of a pixel are the RGB values #2 may be referred to as a region #2, and a junction of the region #1 and the region #2 is referred to as a region #3. The region #3 may be further divided into a sub-region #1, a sub-region #2, a sub-region #3, a sub-region #4, a sub-region #5, and a sub-region #6 according to different colors, and these sub-regions correspond to the color #1, the color #2, the color #3, the color #4, the color #5, and the color #6, respectively.

Upon detecting an operation of the user filling the yellow circle with red, the electronic device may determine, in response to the operation, red as the color to be used for filling.

In addition to determining the color to be used for filling, the electronic device further needs to determine the filled region. The filled region may also be referred to as a filled region. When determining the filled region, the electronic device may determine a location where the user clicks as a seed point (that is, a location indicated by a blue pentagram in (a) in FIG. 6), and perform flood fill by using the seed point as a start point. A color of the seed point is yellow; that is, its corresponding RGB values are the RGB values #2.

When determining the initial flood region, the electronic device may adjust N to 0, to determine a region with the same RGB values as the RGB values #2, where the region is the initial flood region. In other words, the initial flood region is a region in which RGB values of a pixel are equal to the RGB values of the seed point. It may be understood that in the example shown in FIG. 6, the initial flood region is the same as the region #2.

When determining the dynamic flood region, the electronic device may gradually increase N. As described above, the region selected by the electronic device also becomes larger. The electronic device may determine a difference between a region determined when N is greater than 0 and the initial flood region as the dynamic flood region. When determining the dynamic flood region, the electronic device may determine one or more dynamic flood regions. A description is provided below with reference to FIG. 6.

As shown in (a) in FIG. 6, the region #3 includes the color #1, the color #2, the color #3, the color #4, the color #5, and the color #6. It is assumed that a difference between RGB values of the color #1 and the RGB values #2 is a difference #1, a difference between RGB values of the color #2 and the RGB values #2 is a difference #2, and a difference between RGB values of the color #3 and the RGB values #2 is a difference #3, a difference between RGB values of the color #4 and the RGB values #2 is a difference #4, a difference between RGB values of the color #5 and the RGB values #2 is a difference #5, and a difference between RGB values of the color #6 and the RGB values #2 is a difference #6.

When the electronic device determines the dynamic flood region, the following several possible implementations may be included.

In a possible implementation, a quantity of dynamic flood regions determined by the electronic device is the same as a quantity of colors of the region #3.

For example, the electronic device may first adjust N such that the difference #1 < N < the difference #2. Under this condition, the electronic device may select a region having a difference from the RGB values #2 that is less than N. Because the difference #1 < N < the difference #2, the difference between RGB values of the region selected by the electronic device and the RGB values #2 is less than the difference #2. In the example shown in FIG. 6, the region selected by the electronic device includes the region #2 and the sub-region #1. Because the region #2 is the initial flood region, a dynamic flood region #1 finally determined by the electronic device is the sub-region #1.

After determining the dynamic flood region #1, the electronic device may further continue to adjust N such that the difference #2 < N < the difference #3. Under this condition, the electronic device may select a region having a difference from the RGB values #2 that is less than N. Because the difference #2 < N < the difference #3, the difference between RGB values of the region selected by the electronic device and the RGB values #2 is less than the difference #3. In the example shown in FIG. 6, the region selected by the electronic device includes the region #2, the sub-region #1, and the sub-region #2. Because the region #2 is the initial flood region, and the sub-region #1 is the dynamic flood region #1, a dynamic flood region #2 finally determined by the electronic device is the sub-region #2.

Similarly, the electronic device may determine that, the sub-region #3 is a dynamic flood region #3, the sub-region #4 is a dynamic flood region #4, the sub-region #5 is a dynamic flood region #5, and the sub-region #6 is a dynamic flood region #6.

In other words, in this possible implementation, the electronic device may determine the region corresponding to each color at the junction of the region #1 and the region #2 as a dynamic flood region.

In a possible implementation, a quantity of dynamic flood regions determined by the electronic device is less than a quantity of colors of the region #3, and all the sub-regions in the region #3 are dynamic flood regions.

For example, the electronic device may first adjust N such that the difference #1 < N < the difference #3. Under this condition, the electronic device may select a region having a difference from the RGB values #2 that is less than N. Because the difference #1 < N < the difference #3, the difference between RGB values of the region selected by the electronic device and the RGB values #2 is less than the difference #3. In the example shown in FIG. 6, the region selected by the electronic device includes the region #2, the sub-region #1, and the sub-region #2. Because the region #2 is the initial flood region, a dynamic flood region #1 finally determined by the electronic device includes the sub-region #1 and the sub-region #2.

After determining the dynamic flood region #1, the electronic device may further continue to adjust N such that the difference #3 < N < the difference #5. Under this condition, the electronic device may select a region having a difference from the RGB values #2 that is less than N. Because the difference #3 < N < the difference #5, the difference between RGB values of the region selected by the electronic device and the RGB values #2 is less than the difference #5. In the example shown in FIG. 6, the region selected by the electronic device includes the region #2, the sub-region #1, the sub-region #2, the sub-region #3, and the sub-region #4. Because the region #2 is the initial flood region, and the sub-region #1 and the sub-region #2 are the dynamic flood region #1, a dynamic flood region #2 finally determined by the electronic device is the sub-region #3 and the sub-region #4.

After determining the dynamic flood region #2, the electronic device may further continue to adjust N such that difference #5 < N < difference #7, where the difference #7 > the difference #6. Under this condition, a dynamic flood region #3 finally determined by the electronic device is the sub-region #5 and the sub-region #6.

In a possible implementation, a quantity of dynamic flood regions determined by the electronic device is less than a quantity of colors of the region #3, and not all the sub-regions in the region #3 are dynamic flood regions.

For example, the electronic device may first adjust N such that the difference #1 < N < the difference #3. Under this condition, the electronic device may select a region having a difference from the RGB values #2 that is less than N. Because the difference #1 < N < the difference #3, the difference between RGB values of the region selected by the electronic device and the RGB values #2 is less than the difference #3. In the example shown in FIG. 6, the region selected by the electronic device includes the region #2, the sub-region #1, and the sub-region #2. Because the region #2 is the initial flood region, a dynamic flood region #1 finally determined by the electronic device includes the sub-region #1 and the sub-region #2.

After determining the dynamic flood region #1, the electronic device may further continue to adjust N such that the difference #3 < N < the difference #5. Under this condition, the electronic device may select a region having a difference from the RGB values #2 that is less than N. Because the difference #3 < N < the difference #5, the difference between RGB values of the region selected by the electronic device and the RGB values #2 is less than the difference #5. In the example shown in FIG. 6, the region selected by the electronic device includes the region #2, the sub-region #1, the sub-region #2, the sub-region #3, and the sub-region #4. Because the region #2 is the initial flood region, and the sub-region #1 and the sub-region #2 are the dynamic flood region #1, a dynamic flood region #2 finally determined by the electronic device is the sub-region #3 and the sub-region #4.

After determining the dynamic flood region #2, the electronic device may further continue to adjust N such that the difference #5 < N < the difference #6. Under this condition, a dynamic flood region #3 finally determined by the electronic device is the sub-region #5.

It may be understood that, in this possible implementation, the sub-region #6 is not a dynamic flood region; that is, the sub-region #6 is not to be filled.

For another example, the electronic device may determine, by adjusting N, that, the sub-region #1 is a dynamic flood region #1, the sub-region #2 is a dynamic flood region #2, the sub-region #3 is a dynamic flood region #3, the sub-region #4 is a dynamic flood region #4, the sub-region #5 is a dynamic flood region #5, and the sub-region #6 is not a dynamic flood region.

S502: Fill the initial flood region with the color to be used for filling.

After determining the initial flood region, the electronic device may fill the initial flood region with red, that is, replace yellow with red. A filling effect may be as shown in (b) in FIG. 6.

S503: Determine a fill color for the dynamic flood region based on the color to be used for filling, a color of the dynamic flood region, and the seed point color.

After determining the dynamic flood region, the electronic device may further determine the fill color for the dynamic flood region, to fill the dynamic flood region with the fill color for the dynamic flood region.

With reference to the description of S501, the electronic device may determine the dynamic flood region in a plurality of possible implementations. Therefore, for different implementations of determining the dynamic flood region, the electronic device may differently determine the fill color for the dynamic flood region.

In a possible implementation, when the dynamic flood region includes only one color, the electronic device determines the fill color for the dynamic flood region based on the color to be used for filling, the one color, and the seed point color.

For example, in the example shown in FIG. 6, it is assumed that the dynamic flood region #1 is the sub-region #1; that is, the dynamic flood region #1 includes only the color #1. In this case, the electronic device may determine the fill color for the dynamic flood region #1 based on red, yellow, and the color #1.

When determining the fill color for the dynamic flood region #1 based on red, yellow, and the color #1, the electronic device may determine the fill color for the dynamic flood region #1 according to the following formulas (1) and (2).

$$a = 1 - \frac{\text{fun1}(|C-B|)}{\text{fun2}(B)} \qquad (1)$$

$$D = C + (A - C) \times a \qquad (2)$$

where a is an opacity, C is RGB values of the color of the dynamic flood region, that is, the RGB values of the color #1, B is the color of the seed point, that is, the RGB values of yellow, A is RGB values of the color to be used for filling, that is, the RGB values of red, and D is RGB values of the fill color for the dynamic flood region; and fun1() is a function for obtaining a maximum, a minimum, or an average for RGB channels, and fun2() is a function for obtaining a maximum for RGB channels.

Assuming that the RGB values of the color #1 in FIG. 6 are (235, 228, 166), the RGB values of yellow are (242, 218, 148), and the RGB values of red are (250, 57, 0), |C-B|=(7, 10, 18). In addition, assuming that fun1() is a function for obtaining a maximum for the RGB channels, and fun2() is a function for obtaining a maximum for the RGB channels, there is a=1-18/242=0.93. The electronic device may determine, according to formula (2), that the RGB values of the fill color for the dynamic flood region is (235, 228, 166)+((250, 57, 0)-(235, 228, 166))*0.93=(249, 69, 12). That is, the fill color for the dynamic flood region is determined.

It should be noted that formula (1) and formula (2) are merely examples, and should not be construed as a specific limitation on an embodiment of this application. In some other embodiments of this application, other formulas including the foregoing parameters may also be established.

In a possible implementation, when the dynamic flood region includes a plurality of colors, the electronic device first determines one color based on the plurality of colors, and then determines the fill color for the dynamic flood region based on the color to be used for filling, the newly determined color, and the seed point color.

For example, in the example shown in FIG. 6, it is assumed that the dynamic flood region #1 includes the sub-region #1 and the sub-region #2; that is, the dynamic flood region #1 includes the color #1 and the color #2. The electronic device may determine a color #7 based on the color #1 and the color #2, and then the electronic device determines a fill color for the dynamic flood region #1 based on red, yellow, and the color #7.

For example, when determining the color #7 based on the color #1 and the color #2, the electronic device may randomly determine the color #1 or the color #2 as the color #7.

For example, when determining the color #7 based on the color #1 and the color #2, the electronic device may calculate an average of the RGB values of the color #1 and the RGB values of the color #2, and then determine a color corresponding to the calculated average as the color #7. For example, if the RGB values of the color #1 are (235, 228, 166), and the RGB values of the color #2 are (232, 213, 158), the calculated average of the RGB values of the color #1 and the RGB values of the color #2 is (234, 221, 162) after being rounded to the nearest whole number, and the RGB values of the color #7 are (234, 221, 162).

It should be understood that, for the description of determining the fill color for the dynamic flood region #1 based on red, yellow, and the color #7, refer to the foregoing description. Details are not described herein again.

In a possible implementation, when the dynamic flood region includes a plurality of colors, the electronic device may determine a plurality of fill colors based on each of the plurality of colors, the color to be used for filling, and the seed point color, and then determine a final fill color for the dynamic flood region based on the plurality of fill colors.

For example, in the example shown in FIG. 6, it is assumed that the dynamic flood region #1 includes the sub-region #1 and the sub-region #2; that is, the dynamic flood region #1 includes the color #1 and the color #2. The electronic device may determine a fill color #1 based on the color #1, red, and yellow, determine a fill color #2 based on the color #2, red, and yellow, and then determine the final fill color for the dynamic flood region #1 based on the fill color #1 and the fill color #2.

For example, when determining the final fill color for the dynamic flood region #1 based on the fill color #1 and the fill color #2, the electronic device may randomly determine the fill color #1 or the fill color #2 as the final fill color for the dynamic flood region #1.

For example, when determining the final fill color for the dynamic flood region #1 based on the fill color #1 and the fill color #2, the electronic device may calculate an average of RGB values of the fill color #1 and RGB values of the fill color #2, and then determine a color corresponding to the calculated average as the final fill color for the dynamic flood region #1.

S504: Fill the dynamic flood region with the fill color for the dynamic flood region.

After determining the one or more dynamic flood regions, the electronic device may fill the one or more dynamic flood regions with a fill color corresponding to the one or more dynamic flood regions. A filling effect may be as shown in (c) and (d) in FIG. 6.

(e) in FIG. 6 is a filling effect in which the plurality of colors at the junction are filled with red, directly changing from red to blue, and the transition is very abrupt due to loss of a gradient effect. It can be clearly seen from (d) in FIG. 6 that the junction of the red circle and the blue background in (d) in FIG. 6 gradually transitions from red to blue. It is conceivable that if (d) and (e) in FIG. 6 are zoomed out to a same size, when viewing (d) in FIG. 6, the user may feel it more natural and is less likely to perceive aliasing.

In this embodiment of this application, when performing flood fill, the electronic device may determine a new color at a junction based on a color to be used for filling, a seed point color, and a color at the junction, and then fill the junction with the new color at the junction. In this way, smoother color transition can be achieved while ensuring a filling effect, thereby mitigating aliasing and improving user experience in drawing.

It should be noted that the example in FIG. 6 is described as filling the yellow circle. When the user chooses to fill the blue background, the electronic device may still change the blue background and the colors at the junction according to the foregoing color filling method.

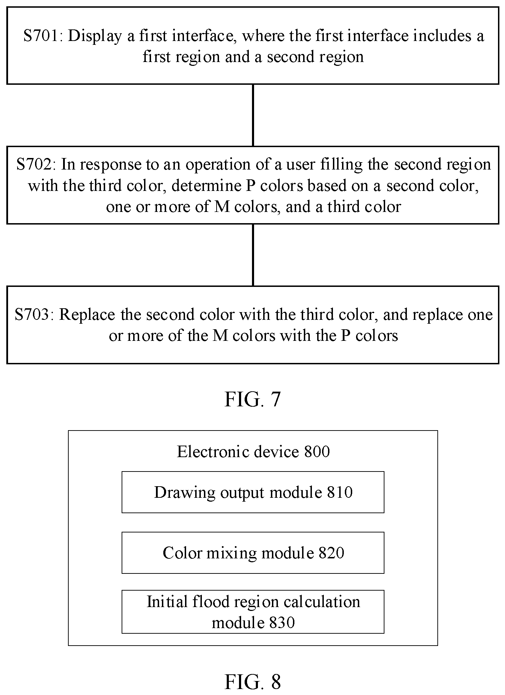

FIG. 7 shows a color filling method according to this application. As shown in FIG. 7, the method includes the following steps.

S701: Display a first interface, where the first interface includes a first region and a second region.

An electronic device displays a first interface. The first interface includes a first region and a second region, where a color of the first region is a first color, a color of the second region is a second color, a junction of the first region and the second region includes M colors, the M colors are determined based on the first color and the second color, any of the M colors is different from the first color or the second color, and M is an integer greater than or equal to 1.

For example, in FIG. 6, the region #1 is the first region, the first color is blue, the region #2 is the second region, the second color is yellow, and the junction of the region #1 and the region #2 is the region #3 and includes six colors: the color #1, the color #2, the color #3, the color #4, the color #5, and the color #6.

The color filling method provided in an embodiment of this application may be applicable to any application scenario with a fill requirement.

In some embodiments, the first interface may be an interface of a drawing application.

In some embodiments, the first interface may be an interface of a game application. For example, the game application may be a game application that requires the user to perform a drawing operation, such as "Draw & Guess" or "Draw It, Guess It".

In some embodiments, the first interface may be an interface of a conferencing application.

In some embodiments, the first interface may be an interface of an educational application.

In some embodiments, the first interface may be an interface of a note-taking application.

In some embodiments, opacities of pixels of the first interface are equal.

In some embodiments, the opacities of the pixels of the first interface are equal to 1.

S702: In response to an operation of a user filling the second region with the third color, determine P colors based on the second color, one or more of the M colors, and a third color.

During drawing, the user performs filling by using a fill tool. When detecting an operation of the user filling the second region with the third color, the electronic device may determine, in response to the operation, P colors based on the second color of the second region, the to-be-filled third color, and one or more of the M colors at the junction, where P is an integer greater than or equal to 1.

For example, in FIG. 6, the electronic device determines red as the third color in response to the operation of the user, and determines the P colors based on red, yellow, and one or more colors at the junction.

In some embodiments, M=P.

For example, in FIG. 6, the junction includes the color #1, the color #2, the color #3, the color #4, the color #5, and the color #6. The electronic device may determine new colors respectively corresponding to the color #1, the color #2, the color #3, the color #4, the color #5, and the color #6.

In some embodiments, M>P.

For example, in FIG. 6, the junction includes the color #1, the color #2, the color #3, the color #4, the color #5, and the color #6. The electronic device may determine new colors respectively corresponding to the color #1, the color #2, the color #3, the color #4, and the color #5.

For another example, in FIG. 6, the junction includes the color #1, the color #2, the color #3, the color #4, the color #5, and the color #6. The electronic device may determine a same new color corresponding to the color #1 and the color #2, a same new color corresponding to the color #3 and the color #4, and a same new color corresponding to the color #5 and the color #6.

S703: Replace the second color with the third color, and replace one or more of the M colors with the P colors.

In some embodiments, M=P.

For example, in FIG. 6, the junction includes the color #1, the color #2, the color #3, the color #4, the color #5, and the color #6. The electronic device may determine new colors respectively corresponding to the color #1, the color #2, the color #3, the color #4, the color #5, and the color #6, and replace the color #1, the color #2, the color #3, the color #4, the color #5, and the color #6 with the new colors respectively corresponding to the color #1, the color #2, the color #3, the color #4, the color #5, and the color #6.

In some embodiments, M>P.

For example, in FIG. 6, the junction includes the color #1, the color #2, the color #3, the color #4, the color #5, and the color #6. The electronic device may determine new colors respectively corresponding to the color #1, the color #2, the color #3, the color #4, and the color #5, and then replace the color #1, the color #2, the color #3, the color #4, and the color #5 with the new colors respectively corresponding to the color #1, the color #2, the color #3, the color #4, and the color #5, without replacing the color #6.

For another example, in FIG. 6, the junction includes the color #1, the color #2, the color #3, the color #4, the color #5, and the color #6. The electronic device may determine a same new color corresponding to the color #1 and the color #2, a same new color corresponding to the color #3 and the color #4, and a same new color corresponding to the color #5 and the color #6, and then replace the color #1 and the color #2 with the same new color corresponding to the color #1 and the color #2, the color #3 and the color #4 with the same new color corresponding to the color #3 and the color #4, and the color #5 and the color #6 with the same new color corresponding to the color #5 and the color #6.

In this embodiment of this application, when performing flood fill, the electronic device may determine a new color at a junction based on a color to be used for filling, a seed point color, and a color at the junction, and then fill the junction with the new color at the junction. In this way, smoother color transition can be achieved while ensuring a filling effect, thereby mitigating aliasing and improving user experience in drawing.

In some embodiments, the M colors include a fourth color, and determining the P colors based on the second color, the third color, and the one or more of the M colors includes: determining a fifth color based on the second color, the third color, and the fourth color. Replacing the one or more of the M colors with the P colors includes: replacing the fourth color with the fifth color.

For example, in FIG. 6, the second color is yellow, the third color is red, and the fourth color is the color #1. In this case, the fifth color may be determined based on the three colors, and then the fourth color is replaced with the fifth color. For details, refer to the foregoing description. For brevity, details are not described herein again.

In some embodiments, replacing the second color with the third color includes: determining the second region as an initial flood region; and filling the initial flood region with the third color.

For example, in FIG. 6, the electronic device may determine the region #2 as the initial flood region, and then fill the region #2 with red.

In some embodiments, in response to the operation of the user filling the second region with the third color, determining the P colors based on the second color, the third color, and the one or more of the M colors includes: determining P dynamic flood regions based on a difference between RGB values of the second color and RGB values of the one or more of the M colors; and determining the P colors based on colors of the P dynamic flood regions, the third color, and the second color. Replacing the one or more of the M colors with the P colors includes: filling the P dynamic flood regions with the P colors.

In some embodiments, M=P.

For example, in FIG. 6, the junction is divided into the sub-region #1, a sub-region #2, the sub-region #3, the sub-region #4, the sub-region #5, and the sub-region #6. The electronic device may determine that, the sub-region #1 is the dynamic flood region #1, the sub-region #2 is the dynamic flood region #2, the sub-region #3 is the dynamic flood region #3, the sub-region #4 is the dynamic flood region #4, the sub-region #5 is the dynamic flood region #5, and the sub-region #6 is the dynamic flood region #6; and then fill the dynamic flood regions with the colors corresponding to the dynamic flood regions.

In some embodiments, M>P.

For example, in FIG. 6, the junction is divided into the sub-region #1, a sub-region #2, the sub-region #3, the sub-region #4, the sub-region #5, and the sub-region #6. The electronic device may determine that, the sub-region #1 is the dynamic flood region #1, the sub-region #2 is the dynamic flood region #2, the sub-region #3 is the dynamic flood region #3, the sub-region #4 is the dynamic flood region #4, and the sub-region #5 is the dynamic flood region #5; and then fill the dynamic flood regions with the colors corresponding to the dynamic flood regions.

For another example, in FIG. 6, the junction is divided into the sub-region #1, the sub-region #2, the sub-region #3, the sub-region #4, the sub-region #5, and the sub-region #6. The electronic device may determine that, the sub-region #1 and the sub-region #2 are the dynamic flood region #1, the sub-region #3 and the sub-region #4 are the dynamic flood region #2, and the sub-region #5 and the sub-region #6 are the dynamic flood region #3; and then fill the dynamic flood regions with the colors corresponding to the dynamic flood regions.

The color filling method provided in embodiments of this application is mainly described above from the perspective of the electronic device. It may be understood that, to implement the foregoing functions, the electronic device includes a corresponding hardware structure and/or software module for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In a case where each functional module (or unit) is obtained through division corresponding to each function, FIG. 8 is a diagram of composition of an electronic device 800 according to an embodiment of this application. As shown in FIG. 8, the electronic device 800 includes a drawing output module 810 and a color mixing module 820.

The drawing output module 810 is configured to display a first interface, where the first interface includes a first region and a second region, a color of the first region is a first color, a color of the second region is a second color, a junction of the first region and the second region includes M colors, the M colors are determined based on the first color and the second color and are different from the first color and the second color, and M is an integer greater than or equal to 1.

The color mixing module 820 is configured to: in response to an operation of a user filling the second region with the third color, determine P colors based on the second color, a third color, and one or more of the M colors, where P is an integer greater than or equal to 1.

The drawing output module 810 is further configured to replace the second color with the third color, and replace one or more of the M colors with the P colors.

In some embodiments, the M colors include a fourth color, and the color mixing module 820 is specifically configured to determine a fifth color based on the second color, the third color, and the fourth color. The drawing output module 810 is specifically configured to replace the fourth color with the fifth color.

In some embodiments, the M colors include a fourth color, and the color mixing module 820 is specifically configured to: determine a first transparency based on the second color and the fourth color; and determine the fifth color based on the first transparency, the third color, and the fourth color.

In some embodiments, the electronic device further includes an initial flood region calculation module 830. The initial flood region calculation module 830 is configured to determine the second region as an initial flood region, where the initial flood region is a region in which RGB values of a pixel are equal to RGB values of the second color.

The drawing output module 810 is specifically configured to fill the initial flood region with the third color.

In some embodiments, the color mixing module 820 is further configured to determine P dynamic flood regions based on a difference between RGB values of the second color and RGB values of one or more of the M colors.

The color mixing module 820 is specifically configured to determine the P colors based on the second color, the third color, and colors of the P dynamic flood regions.

The drawing output module 810 is specifically configured to fill the P dynamic flood regions with the P colors.

An embodiment of this application provides a computer program product. When the computer program product runs on an electronic device, the electronic device is enabled to perform the technical solutions in the foregoing embodiments. An implementation principle and technical effect of the computer program product are similar to those in the foregoing method-related embodiments. Details are not described herein again.

An embodiment of this application provides a readable storage medium. The readable storage medium includes instructions. When the instructions are run on an electronic device, the electronic device is enabled to perform the technical solutions in the foregoing embodiments. An implementation principle and technical effect of the readable storage medium are similar. Details are not described herein again.

An embodiment of this application provides a chip. The chip is configured to execute instructions. When the chip runs, the technical solutions in the foregoing embodiments are performed. An implementation principle and technical effect of the readable storage medium are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the scope of protection of embodiments of this application is not limited thereto. Any change or replacement readily figured out by a person skilled in the art within the technical scope disclosed in embodiments of this application shall fall within the scope of protection of embodiments of this application. Therefore, the scope of protection of embodiments of this application shall be in accordance with the scope of protection of the claims.

**Claims**

1. A color filling method, comprising:

   displaying a first interface, wherein the first interface comprises a first region and a second region, a color of the first region is a first color, a color of the second region is a second color, a junction of the first region and the second region comprises M colors, the M colors are determined based on the first color and the second color and are different from the first color and the second color, and M is an integer greater than or equal to 1;
   in response to an operation of a user filling the second region with the third color, determining P colors based on the second color, a third color, and one or more of the M colors, wherein P is an integer greater than or equal to 1; and
   replacing the second color with the third color, and replacing one or more of the M colors with the P colors.

2. The method according to claim 1, wherein the M colors comprise a fourth color, and determining the P colors based on the second color, the third color, and the one or more of the M colors comprises:

   determining a fifth color based on the second color, the third color, and the fourth color; and
   replacing the one or more of the M colors with the P colors comprises:
   replacing the fourth color with the fifth color.

3. The method according to claim 2, wherein determining the fifth color based on the second color, the third color, and the fourth color comprises:

   determining a first transparency based on the second color and the fourth color; and
   determining the fifth color based on the first transparency, the third color, and the fourth color.

4. The method according to claim 3, wherein determining the first transparency based on the second color and the fourth color comprises:

   determining the first transparency according to the following formula:

   $$a = 1 - \frac{\mathrm{fun1}(|C - B|)}{\mathrm{fun2}(B)}$$

   wherein a is the first transparency, C is RGB values of the fourth color, B is RGB values of the second color, fun1() is a function for obtaining a maximum, a minimum, or an average for RGB channels, and fun2() is a function for obtaining a maximum for RGB channels; and
   determining the fifth color based on the first transparency, the third color, and the fourth color comprises:

   determining the fifth color according to the following formula:

   $$D = C + (A - C) \times a$$

   wherein D is RGB values of the fifth color, and A is RGB values of the third color.

5. The method according to any one of claims 1 to 4, wherein replacing the second color with the third color comprises:

   determining the second region as an initial flood region, wherein the initial flood region is a region in which RGB values of a pixel are equal to RGB values of the second color; and
   filling the initial flood region with the third color.

6. The method according to any one of claims 1 to 5, wherein in response to the operation of the user filling the second region with the third color, determining the P colors based on the second color, the third color, and the one or more of the M colors comprises:

   determining P dynamic flood regions based on a difference between RGB values of the second color and RGB values of the one or more of the M colors; and

determining the P colors based on colors of the P dynamic flood regions, the third color, and the second color; and

replacing the one or more of the M colors with the P colors comprises:

filling the P dynamic flood regions with the P colors.

7. The method according to claim 6, wherein P≤M.

8. The method according to any one of claims 1 to 7, wherein opacities of pixels of the first interface are the same.

9. The method according to claim 8, wherein the opacities of the pixels of the first interface are equal to 1.

10. The method according to any one of claims 1 to 9, wherein the first interface is an interface of a drawing application, a drawing interface in a game application, a conferencing application, an educational application, or a note-taking application.

11. An electronic device, comprising one or more processors and one or more memories, wherein the one or more memories store one or more computer programs, the one or more computer programs comprise instructions, and when the instructions are executed by the one or more processors, the method according to any one of claims 1 to 10 is performed.

12. A chip, comprising a processor and a communication interface, wherein the communication interface is configured to: receive a signal, and transmit the signal to the processor, and the processor processes the signal, to enable the method according to any one of claims 1 to 10 to be performed.

13. A computer-readable storage medium, storing computer instructions, wherein when the computer instructions are run on a computer, the method according to any one of claims 1 to 10 is performed.

14. A computer program product, wherein when the computer program product runs on a computer, the computer is enabled to perform the method according to any one of claims 1 to 10.

Electronic device 100

Antenna 1           Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

Interface [120] for external memory

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1

| Application layer | Camera | Calendar | Maps | WLAN | Music | Messages |
|---|---|---|---|---|---|---|
| | Gallery | Call | Navigation | Bluetooth | Videos | ... |

| Application Framework layer | Window manager | Content provider | Phone manager | Resource manager |
|---|---|---|---|---|
| | Notification manager | View system | ... | |

| System library | Surface manager | Three-dimensional graphics processing library | |
|---|---|---|---|
| | Two-dimensional graphics engine | Media Library | Graphics processing library | ... |

| Kernel layer | Display driver | Camera driver | |
|---|---|---|---|
| | Audio driver | Sensor driver | ... |

FIG. 2

Blue pentagram

(a) (b)

(c) (d)

FIG. 3

401

Blue

FIG. 4(a)

FIG. 4(b)

FIG. 4(c)

FIG. 4(d)

FIG. 4(e)

FIG. 4(f)

S501: Determine a color to be used for filling and a filled region, where the filled region includes an initial flood region and a dynamic flood region

S502: Fill the initial flood region with the color to be used for filling

S503: Determine a fill color for the dynamic flood region based on the color to be used for filling, a color of the dynamic flood region, and a seed point color

S504: Fill the dynamic flood region with the fill color for the dynamic flood region

FIG. 5

FIG. 6

S701: Display a first interface, where the first interface includes a first region and a second region

S702: In response to an operation of a user filling the second region with the third color, determine P colors based on a second color, one or more of M colors, and a third color

S703: Replace the second color with the third color, and replace one or more of the M colors with the P colors

FIG. 7

Electronic device 800

Drawing output module 810

Color mixing module 820

Initial flood region calculation module 830

FIG. 8

## INTERNATIONAL SEARCH REPORT

| International application No. |
| --- |
| **PCT/CN2025/081032** |

| A. | CLASSIFICATION OF SUBJECT MATTER |
| --- | --- |

G06T11/40 (2006.01)i

According to International Patent Classification (IPC) or to both national classification and IPC

| B. | FIELDS SEARCHED |
| --- | --- |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, ENTXT, ENTXTC, WPABS, VEN, IEEE, CNKI, 万方, WANFANG, 百度, BAIDU: 颜色, 填充, 区域, 泛洪, 交界, 边界, 相交, 渐变, 变化, 种子, Color, filling, Flood Fill, area, boundary, seed, change, gradient

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107944438 A (VIVO MOBILE COMMUNICATION CO., LTD.) 20 April 2018 (2018-04-20) <br> description, paragraphs 7-14 and 66-67 | 1-14 |
| A | CN 108597000 A (NETEASE (HANGZHOU) NETWORK CO., LTD.) 28 September 2018 (2018-09-28) <br> entire document | 1-14 |
| A | CN 111161378 A (BEIJING KINGSOFT INTERNET SECURITY SOFTWARE CO., LTD.) 15 May 2020 (2020-05-15) <br> entire document | 1-14 |
| A | CN 108197567 A (BAIDU ONLINE NETWORK TECHNOLOGY (BEIJING) CO., LTD.) 22 June 2018 (2018-06-22) <br> entire document | 1-14 |
| A | US 2009184966 A1 (PERANI MICHAEL et al.) 23 July 2009 (2009-07-23) <br> entire document | 1-14 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 April 2025** | **15 May 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/081032** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020031058 A1 (SONY INTERACTIVE ENTERTAINMENT INC.) 30 January 2020 (2020-01-30)<br>      entire document | 1-14 |

Form PCT/ISA/210 (second sheet) (July 2022)

**INTERNATIONAL SEARCH REPORT**
**Information on patent family members**

International application No.

**PCT/CN2025/081032**

| Patent document cited in search report | | | Publication date (day/month/year) | Patent family member(s) | | | Publication date (day/month/year) |
|---|---|---|---|---|---|---|---|
| CN | 107944438 | A | 20 April 2018 | CN | 107944438 | B | 25 September 2020 |
| CN | 108597000 | A | 28 September 2018 | None | | | |
| CN | 111161378 | A | 15 May 2020 | CN | 111161378 | B | 17 October 2023 |
| CN | 108197567 | A | 22 June 2018 | KR | 20190082067 | A | 09 July 2019 |
| | | | | KR | 102207408 | B1 | 26 January 2021 |
| | | | | JP | 2019135642 | A | 15 August 2019 |
| | | | | JP | 6935386 | B2 | 15 September 2021 |
| | | | | EP | 3506168 | A1 | 03 July 2019 |
| | | | | US | 2019206088 | A1 | 04 July 2019 |
| | | | | US | 10909724 | B2 | 02 February 2021 |
| | | | | CN | 108197567 | B | 24 August 2021 |
| US | 2009184966 | A1 | 23 July 2009 | US | 8345056 | B2 | 01 January 2013 |
| US | 2020031058 | A1 | 30 January 2020 | US | 10974459 | B2 | 13 April 2021 |
| | | | | GB | 201812271 | D0 | 12 September 2018 |
| | | | | GB | 2571382 | A | 28 August 2019 |
| | | | | GB | 2571382 | B | 19 February 2020 |
| | | | | JP | 2020015314 | A | 30 January 2020 |
| | | | | JP | 7308088 | B2 | 13 July 2023 |
| | | | | EP | 3599587 | A2 | 29 January 2020 |
| | | | | EP | 3599587 | A3 | 18 March 2020 |
| | | | | EP | 3599587 | B1 | 03 April 2024 |
| | | | | CN | 110853129 | A | 28 February 2020 |

Form PCT/ISA/210 (patent family annex) (July 2022)

**REFERENCES CITED IN THE DESCRIPTION**

**Patent documents cited in the description**

- CN 202410367319